# EUROPÄISCHE PATENTSCHRIFT

(11) **EP 1 343 582 B1**
(45) Veröffentlichungstag und Bekanntmachung des Hinweises auf die Patenterteilung: **01.06.2005**
(21) Anmeldenummer: 01989601.8
(22) Anmeldetag: 17.12.2001
(51) Int. Cl.: B01J 19/28, C08J 11/16

(54) **VORRICHTUNG ZUM REINIGEN UND/ODER DEKONTAMINIEREN VON POLYESTER**
DEVICE FOR PURIFYING AND/OR DECONTAMINATING POLYESTER
DISPOSITIF DE PURIFICATION ET / OU DE DECONTAMINATION DE POLYESTER

(30) Priorität: 15.12.2000 EP 00127589
(43) Veröffentlichungstag der Anmeldung: 17.09.2003
(73) Patentinhaber: Cleanaway Deutschland AG & Co.KG, 20457 Hamburg (DE)
(72) Erfinder: EBEL, Achim, 18055 Rostock (DE); GUTIERREZ, Carlos, Dario, Spartanburg, SC 29302 (US)
(74) Vertreter: Meier, Frank
(86) Internationale Anmeldenummer: PCT/EP2001/014881
(87) Internationale Veröffentlichungsnummer: WO 2002/047809

(56) Entgegenhaltungen:
- WO-A-00/18830
- NL-A- 6 812 489
- US-A- 3 424 561
- US-A- 4 136 965
- US-A- 4 439 141
- US-A- 6 136 285

## Beschreibung

Die vorliegende Erfindung betrifft eine Vorrichtung zum Reinigen und/oder Dekontaminieren von Polyester, insbesondere von Polyethylentherephthalat (im folgenden PET genannt). Bei PET handelt es sich um eines der am meisten verwendeten Polyester. PET wird vielfältig verwendet, findet jedoch vor allem in der Getränkeindustrie als Material für Getränkeflaschen Verwendung.

Um insbesondere bei Getränkeflaschen das verwendete PET auch nach Gebrauch der Flaschen und/oder Kontamination der Flaschen wieder verwenden zu können, sind im Stand der Technik Verfahren entwickelt worden, die ein Recyding von Polyester ermöglichen. Nach diesem Recycling kann das gereinigte bzw. dekontaminierte Polyester oder PET wieder für die Herstellung beispielsweise von Getränkeflaschen verwendet werden.

Derartige Verfahren sind beispielsweise in der PCT/US99/23206 offenbart. Bei diesen bekannten Verfahren wird das zu wiederaufzubereitende PET zunächst in kleine Flocken zerkleinert. Anschließend wird das zerkteinerte PET in Wasser gegeben, um leichtere Materialien, wie Papier u.dgl. von dem PET durch Abschöpfen von der Wasseroberfläche trennen zu können. Anschließend wird das PET durch Hitzeeinwirkung getrocknet. Nach der Trocknung wird das zu behandelnde PET mit einem alkalischen Material vermischt. Auch dieses Gemisch wird durch Hitze getrocknet. In dem sich anschließenden zentralen Reaktionsschritt wird das derart mit alkalischem Material vermischte und getrocknete PET unter ständiger weiterer durch Hitze bewirkter Trocknung teilweise verseift. Anschließend werden die durch die Verseifung entstandenen Reaktionsprodukte getrennt, wodurch auch gereinigtes PET gewonnen wird.

Um eine befriedigende Ausbeute von recyceltem PET durch das vorgenannte Verfahren zu erhalten, ist es erforderlich, dass der zentrale Reaktionsschritt im wesentlichen in einer wasserfreien Umgebung stattfindet. Die aus dem Stand der Technik bekannten, für diesen zentralen Reaktionsschritt verwendeten Drehöfen, wie etwa der Rotary Calciner von der Firma Heyl & Patterson Inc., sind jedoch nur bedingt in der Lage, derartige Bedingungen zur Verfügung zu stellen.

Die US 4,439,141 zeigt eine Vorrichtung, die ausgebildet ist, um flussfähiges granulatförmiges Material auf eine erhöhte Temperatur zu erhitzen und das Material zurück auf eine Temperatur abzukühlen. Dies wird erreicht durch eine Vorrichtung, die aus zwei koaxialen Zylindern besteht, die um ihre gemeinsame Achse rotieren, während das Material an einer Seite ein- und austritt und eine Hitzequelle auf der anderen Seite vorgesehen ist. In dem inneren Zylinder ist ein das Innere des inneren Zylinders zumindest teilweise verschließendes Wehr angeordnet, und der innere Zylinder weist auf seiner Innenoberfläche eine axial ausgerichtete Leiste 13 auf, um ein Rutschen des Materials auf der Innenoberfläche des inneren Zylinders zu verhindern.

Aufgabe der vorliegenden Erfindung ist es daher, eine Vorrichtung der eingangs genannten Art zu verbessern, insbesondere so weiterzubilden, dass diese in der Lage ist, eine im wesentlichen wasserfreie Umgebung zur Durchführung derartiger Verfahren zur Verfügung zu stellen.

Diese Aufgabe wird erfindungsgemäß durch eine Vorrichtung gemäß Anspruch 1 gelöst.

Die Vorteile der Erfindung liegen insbesondere darin, dass durch das innerhalb des Drehrohrofens, das Innere des Drehrohrofens zumindest teilweise verschließende Wehr eine konstante Verweilzeit des Gemisches in dem Drehrohrofens gewährleistet ist, die unabhängig von der Durchsatzleistung des Drehrohrofens ist. Dies hat wiederum zu folge, dass das Gemisch immer mit den gleichen Prozessparametem, wie Temperatur und Grad der Trockenheit, beaufschlagt in dem Drehrohrofen reagiert. Es können somit bei jeder Durchsatzmenge die für die maximale Ausbeute an wiederaufbereitetem Polyester notwendigen Prozessparameter eingehalten werden.

Vorteilhaft ist, wenn das Wehr im Bereich des stromabwärts gelegenen Endes des beheizten Ofenbereiches angeordnet ist. Hier kommt die Wirkung des Wehrs optimal zur Geltung, da die gesamte Länge des beheizten Bereiches des Drehrohrofens beeinflusst wird.

Vorteilhaft ist, wenn das Wehr, bevorzugt 10 bis 14, weiter bevorzugt 12, stemförmig von der Mitte des Wehrs ausgehende Durchtrittsöffnungen aufweist Auf diese Weise wird ein Definieren des Durchtrittsquerschnittes für das Gemisch ermöglicht

Bevorzugt ist, wenn die Durchtrittsöffnungen zumindest teilweise mit Abdeckungen abdeckbar sind, um den Füllungsgrad des Drehrohrofens durch Variation der Aufstauwirkung des Wehrs, bevorzugt in einer 5 %-Staffelung des Füllungsgrades von 0 % bis etwa 30 %, weiter bevorzugt bis etwa 50 %, zu variieren. Diese Ausführungsform garantiert maximale Flexibilität des Drehrohrofens und somit optimale Anpassung der Stauwirkung des Wehrs an die Gemischmenge und -art. Die Durchtrittsöffnungen oder auch weitere Perforationen in dem Wehr verhindern auch, dass sich in dem Gemisch durch die Verseifung entstandene Salze übermäßig an dem Wehr anstauen und so die Reaktion und/oder den Austransport der Reaktionsprodukte behindern.

Besonders bevorzugt ist es, wenn der Drehrohrofen in seinem Inneren einen im wesentlichen zylinderförmigen Hohlraum zur Aufnahme des Gemisches bildet. Dabei ist es bevorzugt, wenn der Drehrohrofen auf seiner Innenoberfläche mindestens eine axial ausgerichtete Leiste aufweist Diese Leisten leisten einen essentiellen Beitrag zur Verbesserung des Drehrohrofens gegenüber Öfen aus dem Stand der Technik. Diese Leisten verhindern einen Überschlag des Gemisches in dem Drehrohrofen. Dabei liegt z.B. PET-Mahlgut in dem Gemisch in fester Form vor. Auf der Oberfläche des Mahlgutes befindet sich auf/eingetrocknete Natronlauge. Während der Reaktion des Mahlgutes mit der Natronlauge bilden diese beiden Reagenzien zwei weitere Nebenprodukte, ein Salz in fester Form, sowie Ethylenglykol in gasförmiger Form. Bei Drehung des Ofens neigt dieses Gemisch dazu, sich in dem Ofen zu überschlagen. Durch den Überschlag des Gemisches in dem Ofen wird Staub freigesetzt, der sich durch das Aneinanderreihen der Mahlgutpartikel bildet Diese aus dem Stand der Technik bekannte Staubentwicklung ist jedoch aus den im folgenden dargestellten Gründen sehr nachteilig:

Durch den permanenten Wasserentzug im Drehrohrofen entsteht ein Feuchtigkeitsgefälle im Drehrohrofen; zu Beginn, also etwa auf Höhe des Produkteinlaufs, ist die Feuchte höher als zum Ende des Drehrohrs, also etwa auf Höhe des Produktauslaufs. Entgegengesetzt zu diesem Verlauf verhält sich die Staubbildung im Drehrohrofen. Wird stark entwässerter Staub am Ende des Ofens aufgewirbelt, so wird dieser durch die Abluftführung nach vorne transportiert. Der Staub reagiert mit der Natronlauge und trägt diese durch die Abluftführung aus, da durch den Staub Wasser aufgenommen wird. Insgesamt kommt es so zu einer Dämpfung der Oberflächenreaktion des alkalischen Materials an dem Polyester, da diese Reaktion nur ohne Wasser optimal abläuft, wodurch wiederum eine nachteilige Verringerung der Ausbeute an gereinigtem Polyester zu beklagen ist

Die erfindungsgemäßen Leisten verhindern jedoch den Überschlag des Gemisches und eliminieren somit die Wasseraufnahme bzw. Natronlaugeaufnahme durch den Staub in dem Ofen und erhöhen daher die Ausbeute an gereinigtem Material.

Vorteilhaft ist, wenn 5 bis 20, bevorzugt 12, entlang des Umfanges gleichmäßig verteilte, axiale Leisten vorgesehen sind. So wird auf dem gesamten Innenumfang ein Überschlag des Gemisches konstant verhindert.

Weiter vorteilhaft ist, wenn die mindestens eine axial ausgerichtete Leiste sich derart weit radial nach innen in den Innenraum des Drehrohrofens erstreckt, das im gesamten Drehzahlbereich des Drehrohrofens ein Überschlag des Gemisches in dem Drehrohrofen sicher verhindert wird.

Vorteilhaft ist, wenn der Drehrohrofen einen Durchmesser von 2 m bis 4 m, bevorzugt 2,6 m, und eine beheizte Länge von 15 m bis 25 m, bevorzugt 18 m, aufweist So lassen sich die notwendigen Reaktionszeiten von über 2 Stunden realisieren.

Bevorzugt ist, wenn der Drehrohrofen zur Aufnahme des Gemisches einen Gemischeinlaufzylinder mit einem Durchmesser von 0,5 m bis 1,5 m, bevorzugt 0,8 m, aufweist. Dabei ist es vorteilhaft, wenn der Drehrohrofen zur Ausgabe des Gemisches einen Gemischauslaufzylinder mit einem Durchmesser von 1 m bis 3 m, bevorzugt 1,8 m, aufweist. Beide Bemaßungen passen insbesondere zu der obigen Gesamtlänge des Ofens.

Bevorzugt ist, wenn der Gemischeinlaufzylinder und/oder der Gemischauslaufzylinder mit einem konischen Übergang mit dem Drehrohrofen verbunden ist.

Vorteilhaft ist, wenn der Drehrohrofen innerhalb des Gernischauslaufzylinders Zwangsförderelemente, z.B. Förderspiralen, zur Förderung des Gemisches aufweist, um bei einer vorteilhaften Verjüngung des Rohrs im Bereich der Dichtung des Gemischauslaufzylinders einen Materialstau zu verhindern und eine gleichmäßige Förderung des Gemisches zu garantieren.

Bevorzugt ist, wenn an den Enden des Gemischeinlaufzylinders und/oder des Gemischauslaufzylinders Flansche zur Aufnahme von Abdichtungen zur luftdichten Abdichtung des Ofens angeordnet sind. Diese Abdichtungen sind besonders wichtig, da sie verhindern, dass Wasser oder Feuchtigkeit in den Ofen gelangt. Sie erhöhen daher ebenfalls die Ausbeute. Besonders an dem Auslaß ist die Dichtung wichtig, da dort bei Feuchtigkeitseintritt eine Depolymerisation des Produktes auftreten würde.

Bevorzugt ist, wenn der Drehrohrofen in seinem Inneren, bevorzugt etwa sechs, Schöpftaschen aufweist, welche das Produkt den auslaufseitigen Konus in den Gemischauslaufzylinder hinauffördern, insbesondere wenn eine reibungslose Zwangsförderung stattfindet

Vorteilhaft ist, wenn der Drehrohrofen zum mechanischen Transport des Gemisches eine Neigung gegenüber der Horizontalen aufweist. Die Neigung sorgt zumindest auch für den Transport des Gemisches durch den Ofen.

Vorteilhaft ist, wenn der Drehrohrofen an einem ausfallseitigen Ende ein Schwenklager aufweist so dass der Drehrohrofen durch einfallseitiges Anheben und Verschwenken des Drehrohrofens um dieses Schwenklager in die Neigung verschwenkbar ist.

Bevorzugt ist, wenn die Neigung 10 mm/m bis 20 mm/m, bevorzugt 15 mm/m, beträgt. Bei diesen Neigungswerten werden die optimalen Gemischgeschwindigkeiten in dem Ofen erzielt.

Bevorzugt ist, wenn innerhalb des Drehrohrofens, bevorzugt 5 bis 20, weiter bevorzugt 10, Thermoelemente zur Überwachung der Gemischtemperatur in dem Drehrohrofen vorgesehen sind, welche Thermoelemente an einem relativ zu dem Drehrohrofen feststehenden Messbalken innerhalb des Drehrohrofens befestigt sind. Damit kann die gewünschte Reaktionstemperatur in dem Ofen genau überwacht und ggf. gesteuert werden.

Bevorzugt ist, wenn pro Heizzone zwei Thermoelemente vorgesehen sind. So ist eine Steuerung individuell für jedes Heizelement möglich.

Vorteilhaft ist, wenn an einem axialen Punkt des Drehrohrofens jeweils zwei Thermoelemente vorgesehen sind, die unterschiedlich beabstandet zur Drehachse des Drehrohrofens innerhalb des Drehrohrofens vorgesehen sind. Diese rechenartige Anordnung der Sensoren in dem Ofen lässt eine Überwachung der Temperatur in verschiedenen Tiefen des reagierenden Gemisches zu, da die Thermoelemente unterschiedlich tief in das Gemisch hineinragen.

Vorteilhaft ist, wenn der Drehrohrofen 2 bis 5, bevorzugt drei, Prozesszonen entlang seiner Längsachse aufweist. Somit lassen sich in einem Ofen verschiedene Prozessschritte abarbeiten.

Vorteilhaft ist, wenn die Ausgestaltung, die Länge und die Temperatur der ersten Prozesszone derart ist, dass eine weitere Vortrocknung des Gemisches vomehmbar ist, bevorzugt von 0,8 % bis 0,2 %, bevorzugt 0,4 %, Wassergehalt auf 100 ppm bis 50 ppm, bevorzugt 80 ppm, Wassergehalt.

Bevorzugt ist, wenn die Ausgestaltung, die Länge und die Temperatur der zweiten Prozesszone derart ist, dass eine Oberflächenreaktion zur teilweisen Verseifung des Gemisches stattfindet.

Vorteilhaft ist, wenn die Ausgestaltung, die Länge und die Temperatur der dritten Prozesszone derart ist, dass eine Diffusionsreaktion zur Entfernung von aromatischen Verunreinigungen in dem Gemisch stattfindet.

Bevorzugt ist, wenn in dem Drehrohrofen mindestens drei, bevorzugt fünf, weiter bevorzugt gleichlange, Heizzonen vorgesehen sind. Hierdurch kann für jeden Ofenabschnitt sehr genau die gewünschte Temperatur in dem Ofen eingestellt werden.

Vorteilhaft ist, wenn außerhalb des Drehrohrofens angeordnete Heizstrahler vorgesehen sind, mit deren Hilfe der Drehrohrofen von außen beheizbar ist, so dass eine indirekte Beheizung des Gemisches in dem Drehrohrofen erzeugbar ist

Bevorzugt ist, wenn der Drehrohrofen eine Heißluftöffnung zum Einströmen von Heißluft in das Innere des Drehrohrofens aufweist, bevorzugt eine zweite Öffnung zum Ausströmen der verbrauchten Heißluft aufweist.

Bevorzugt ist, wenn ein Heißlufterzeuger zum Erzeugen der Heißluft vorgesehen ist, deren Temperatur der Temperatur im Inneren des beheizten Drehrohrofens im wesentlichen entspricht Auf diese Weise wird ein Temperaturgefälle beim Eintreten der Luft in das Innere des Ofens vermieden.

Bevorzugt ist, wenn ein Heißlufttrockner zum Trocknen der für das Innere des Drehrohrofens vorgesehenen Heißluft vorgesehen ist So kann auch die Heißluft keine schädliche Feuchtigkeit in den Ofen tragen.

Vorteilhaft ist, wenn in dem Drehrohrofen eine, bevorzugt aus, weiter bevorzugt trockener, Heißluft bestehende, Gegenluftströmung entgegen der Bewegungsrichtung des Gemisches mit Hilfe eines Gebläses erzeugbar ist. Durch die Einrichtung des Gebläses derart, dass die Luft entgegen der Bewegung des Gemisches in dem Ofen strömt, gelangt immer maximal saubere und trockene Heißluft an den bereits gereinigtes Polyester enthaltenen Endabschnitt des Ofens, so dass dieses wertvolle Produkt optimal vor Feuchtigkeitseinflüssen geschützt wird.

Vorteilhaft ist, wenn ein Mischer zum Mischen des Gemisches vor Eintritt in den Drehrohrofen vorgesehen ist, welcher Mischer bevorzugt eine geheizte Mischschnecke aufweist. So wird auch ein Temperaturgefälle des Gemisches beim Eintritt in den Ofen vermieden.

Vorteilhaft ist, wenn dem Mischer ein Vortrockner zum Trocknen des für den Mischer vorgesehenen Polyesters vorschaltet ist Auch hierdurch wird der Eintritt von schädlicher Feuchtigkeit in den Ofen verhindert.

Vorteilhaft ist, wenn die Heizleistung des Vortrockners zur Trocknung des Inhalts des Vortrockners größer ist als die Lüftungsleistung des Vortrockners zur Trocknung des Inhalts des Vortrockners. Dies verhindert, dass unreagierte Natronlauge abgeführt wird.

Vorteilhaft ist, wenn in dem Vortrockner eine Gegenluftströmung gegen die Bewegungsrichtung des zu trocknenden Gutes in dem Vortrockner erzeugbar ist

Weitere bevorzugte Ausführungsbeispiele der Erfindung sind in den Unteransprüchen angegeben.

Ein Ausführungsbeispiel der erfindungsgemäßen Vorrichtung wird nun anhand der Zeichnung beschrieben.

Die Zeichnung zeigt
- Fig. 1: eine Seitenansicht eines Drehrohrofens;
- Fig. 2: das Wehr des Drehrohrofens der Fig. 1 in einer Frontalansicht;
- Fig. 3: eine schematische Seitenansicht der Vorrichtung mit dem Drehrohrofen der Fig. 1;
- Fig. 4: die Ansicht der Fig. 1 mit schematisch dargestellten Thermoelementen;
- Fig. 5: eine Detailansicht zweier Thermoelemente einer Heizzone;
- Fig. 6: eine schematische Detailansicht der Leisten in dem Drehrohrofen der Fig. 1;
- Fig. 7: eine schematische, perspektivische Ansicht des Drehrohrofens in Richtung seiner Längsachse;
- Fig. 8: eine schematische Darstellung des abgewickelten Mantels des Drehrohrofens; und
- Fig. 9: eine fotographische Aufnahme des Drehrohrofens entsprechend Fig. 7.

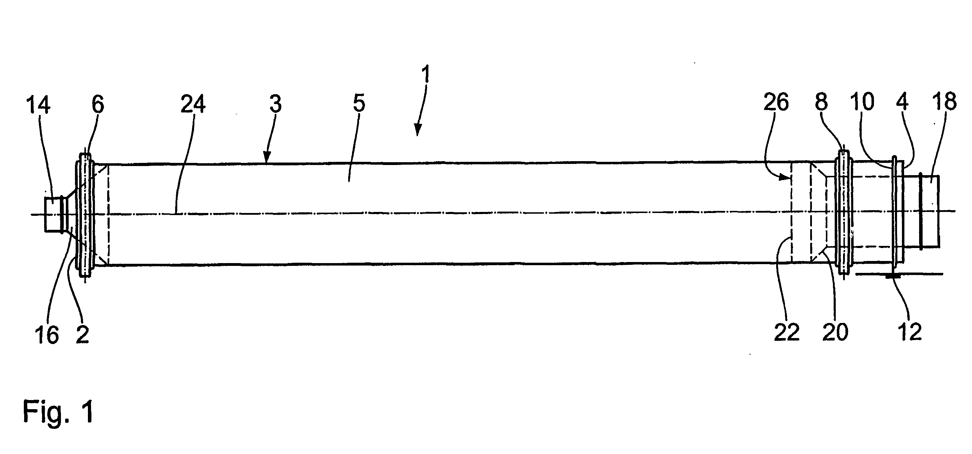

Fig. 1 zeigt eine Seitenansicht eines Drehrohrofens 1. Der Drehrohrofen 1 weist einen zylinderförmigen Mantel 3 auf und ist mit im Bereich seiner Stirnseiten 2 bzw. 4 vorgesehenen Laufkränzen 6 bzw. 8 auf nicht dargestellten Lagern drehbar gelagert. Der Mantel 3 umschließt einen Produktraum 5 zur Aufnahme des nicht dargestellten, aufzubereitenden Gemisches.

Die Stirnseite 4 bildet das auslaufseitige Ende und die Stirnseite 2 bildet das einlaufseitige Ende des Drehrohrofens 1. Antreibbar ist der Drehrohrofen 1 über einen im Bereich der Stirnseite 4 vorgesehenen Zahnkranz 10, der von einem von einem nicht dargestellten Motor angetriebenen Zahnkranzritzel 12 angetrieben wird. Die Drehzahl des Drehrohrofens 1 lässt sich zwischen 0,5 und 5,0 U/min einstellen.

Einlaufseitig weist die Stirnseite 2 eine koaxiale, zylinderförmige Verlängerung 14 auf. Diese dient dem Drehrohrofen 1 als Gemischeinlauf für das Gemisch. Die Verlängerung 14 weist einen geringeren Durchmesser als der Mantel 3 auf und ist mit dem Mantel 3 über ein konusförmiges Verbindungsstück 16 verbunden.

Auslaufseitig weist die Stirnseite 4 ebenfalls eine koaxiale, zylinderförmige Verlängerung 18 auf. Diese dient dem Drehrohrofen 1 als Gemischauslauf für das wiederaufbereitete Gemisch. Die Verlängerung 18 weist einen geringeren Durchmesser als der Mantel 3 jedoch einen größeren Durchmesser als die einlaufseitige Verlängerung 14 auf und ist mit dem Mantel 3 über ein konusförmiges Verbindungsstück 20 verbunden, welches aufgrund des gegenüber der Einlaufseite geringeren Durchmesserunterschiedes zwischen der Verlängerung 18 und dem Mantel 3 bei gleicher Steigung kürzer ist als das Verbindungsstück 16 an der Stirnseite 2.

Im Bereich der auslaufseitigen Stirnseite 4, jedoch in Bewegungsrichtung des Gemisches noch vor dem Verbindungsstück 20, ist eine sternförmige Wehr 22 vorgesehen. Diese Wehr 22 erstreckt sich radial von der Drehachse 24 des Drehrohrofens 1 von innen an den Mantel 3. In der Wehr 22 sind Durchtrittsöffnungen 26 für das Gemisch vorgesehen.

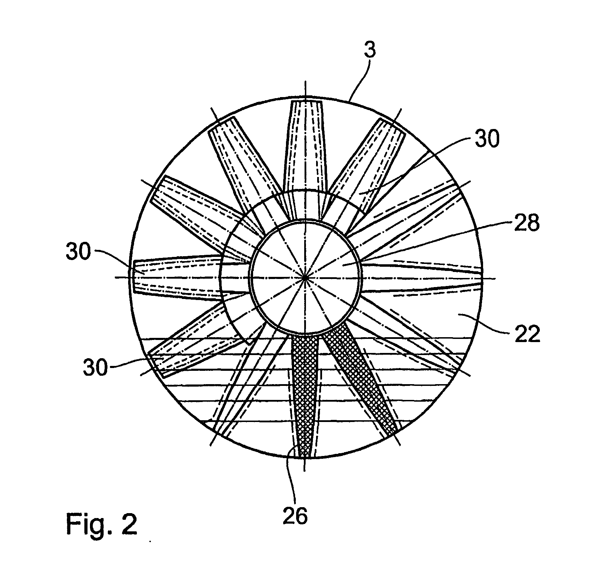

Fig. 2 zeigt das Wehr 22 des Drehrohrofens 1 der Fig. 1 in einer Frontalansicht. Die Fig. 2 zeigt 12 sternförmig von einem geschlossenen Mittelbereich 28 ausgehende Durchtrittsöffnungen 26 in dem Wehr 22. Die Öffnungen 26 lassen sich mit Hilfe von Abdeckblechen 30 individuell verschließen.

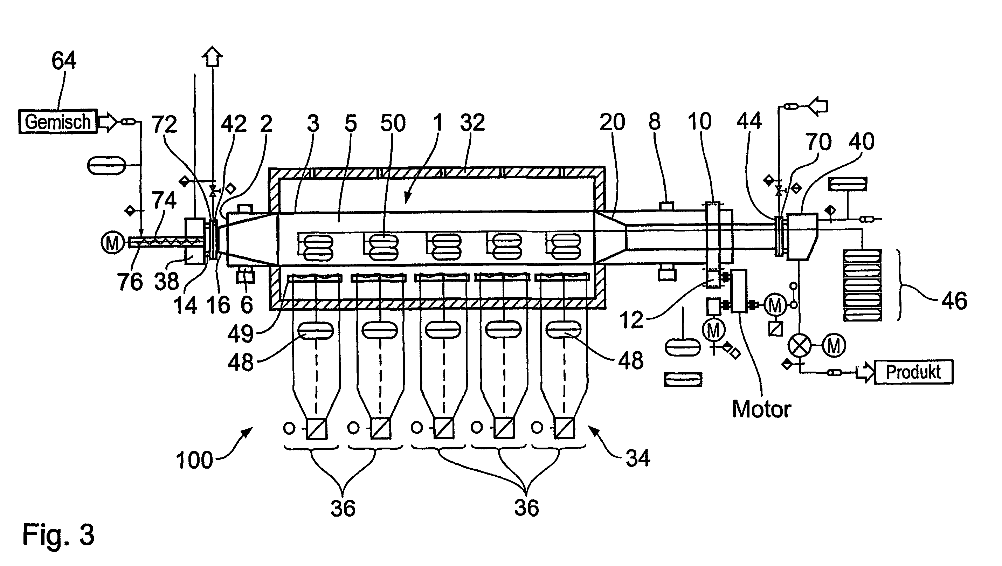

Fig. 3 zeigt eine schematische Seitenansicht der Vorrichtung 100 mit dem Drehrohrofen 1 der Fig. 1. Teile, die denen der Fig. 1 und 2 entsprechen, sind mit den gleichen Bezugszeichen bezeichnet.

### Darüber hinaus zeigt die Fig. 3 folgendes:

Einen den Drehrohrofen 1 umgebenden Heiztunnel 32 mit einer elektrischen Beheizungseinrichtung 34, welcher den Ofenmantel 3 axial umschließt Der Heiztunnel 32 rotiert nicht mit und ist mit 5 getrennt regelbaren Heizzonen 36 ausgerüstet Jede Heizzone 36 weist einen eigenen Heizstrahler 49 auf, der den Mantel 3 des Drehrohrofens 1 von außen mit Hitze bestrahlt.

Ein- 38 und Ausfall- 40 -Gehäuse, welche den (vom Ofenmantel 3 gebildeten) Produktraum 5 jeweils stirnseitig abschließen. Beide Gehäuse 38 und 40 sind stationär.

Ein- und ausfallseitige Burgmann-Dichtungen 42 und 44, welche den Produktraum 5 zwischen dem drehenden Ofenmantel 3 und den stationären Ein- und Ausfallgehäusen 38 und 40 abdichten.

Instrumente zur Messung der Produkttemperaturen 46 und der Manteltemperaturen 48, jeweils vorhanden für jede Temperaturregelzone 36. Die Instrumente zur Messung der Produkt- bzw. Gemischtemperaturen weisen in dem Produktraum stationäre Thermoelemente 50 auf. Es sind jeweils zwei Thermoelement 50 pro Heizzone 36 vorgesehen.

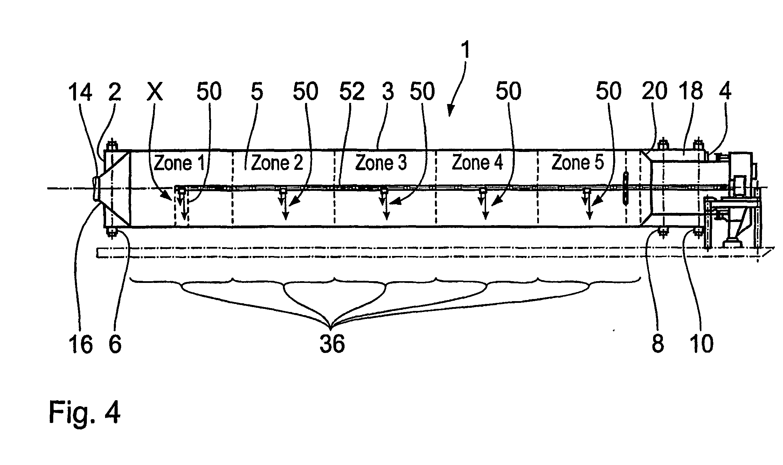

Fig. 4 zeigt die Ansicht der Fig. 1 mit schematisch dargestellten Thermoelementen 50. Die Thermoelemente sind an einem zentralen Messbalken 52 befestigt.

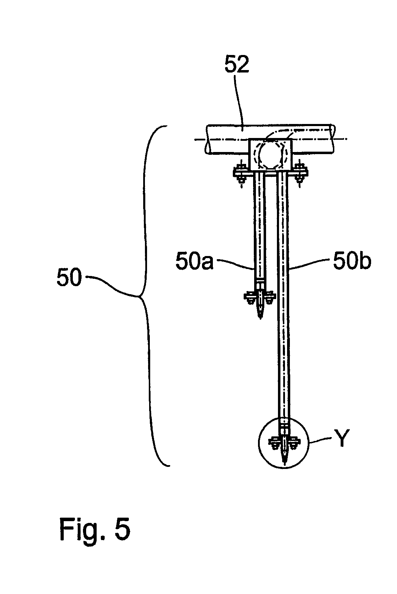

Fig. 5 zeigt eine Detailansicht zweier Thermoelemente 50 einer Heizzone 36. Es ist zu erkennen, dass die beiden Thermoelemente 50a und 50b unterschiedlich weit von dem zentralen Messbalken 52 beabstandet sind, so dass sie unterschiedlich weit in das Gemisch hineinragen.

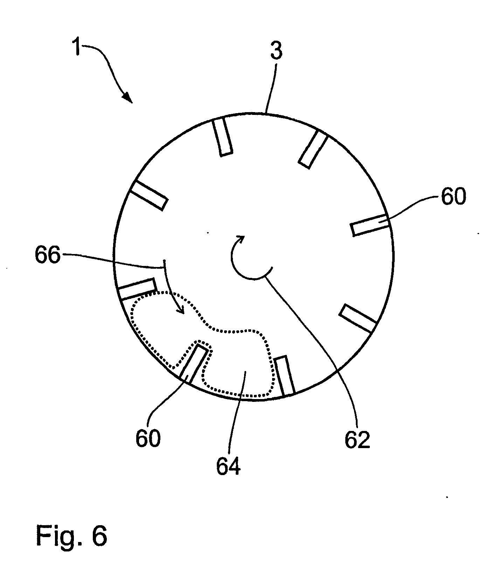

Fig. 6 zeigt eine schematische Detailansicht von Leisten 60 in dem Drehrohrofen 1 der Fig. 1. Der Ofen 1 rotiert gemäß Pfeil 62. Die Leisten 60 verhindern einen Überschlag des Gemisches 64 während der Rotation des Drehrohrofens 1. Während der Rotation des Drehrohrofens 1 rutscht das Gemisch 64 vielmehr wegen der Leisten 60 immer wieder gemäß Pfeil 66 zurück, ohne sich zu überschlagen.

Die Arbeitsweise des dargestellten Drehrohrofens 1 wird nachstehend beschrieben. Diese Arbeitsweise bildet einen Teil der vorliegenden Erfindung. Dabei bleibt das Richten von Ansprüchen auf die Einzelheiten dieser Arbeitsweise vorbehalten.

Der indirekt beheizte Drehrohrofen 1 dient zur Aufbereitung des Gemisches 64 (hier recyceltes PET-Malgut), welches dem Produktraum 5 im vorgetrocknetem Zustand (Restfeuchte max. 0,4 Masse -% Wasser) zugeführt wird. Das Aufgabematerial enthält zudem NaOH (max. 10 Masse -% an 50%-iger NaOH), welches mit dem PET unter den Temperaturbedingungen im Drehrohrofen 1 oberflächlich reagiert - es entsteht ein PET-Granulat, welches nach weiteren Verfahrensschritten wieder für die Herstellung von Lebensmittelverpackungen geeignet ist. Die Zulassung zur Verwendung in Lebensmittelverpackungen ist daran gebunden, dass die PET-Verweilzeit oberhalb 400 K mindestens zwei Stunden beträgt.

Während der Inbetriebnahme des Ofens 1 sollte zunächst das Stemwehr 22 an die verfahrenstechnischen Gegebenheiten angepasst werden. Hierzu ist es wichtig zu wissen, dass die Funktion des Konstanthaltens der Produktverweilzeit (im beheizten Ofenbereich) unabhängig von der Produktdurchsatzleistung nur dann in absolut idealer Weise realisiert wird, solange das mechanische Produktverhalten sowie die Ofendrehzahl und -neigung konstant gehalten werden. Das mechanische Produktverhalten wird (unabhängig von der Durchsatzleistung) im wesentlichen dann konstant bleiben, wenn die Komgrößenverteilung und die globale Partikelform des PET-Mahlgutes sich nicht ändern. Die Einstellung des Sternwehres 22 erfolgt durch Öffnen bzw. Verschließen der parabelförmigen Durchtrittsöffnungen 26 im Stemwehr 22 - hierfür sind für insgesamt 12 Öffnungen 26 die einschraubbaren Verschlussbleche 30 vorhanden.

Die Einstellarbeiten sollten im kalten Ofenzustand bevorzugt nach folgendem Plan durchgeführt werden:

Start mit sechs geöffneten Einschnitten 26, der bevorzugten Ofendrehzahl (Vorschlag 4 min⁻¹) sowie fester (z.B. der halben) Durchsatzleistung repräsentativem Aufgabematerials.

Abwarten des stationären Betriebszustandes (10 - 15 Stunden) und Kontrolle des Produktfüllstandes am Stemwehr 22 bei stehendem Ofen 1. Vermutlich wird der vorliegende Füllstand bei dieser ersten Kontrolle noch nicht dem Sollfüllstand für die gewählte Durchsatzleistung entsprechen. Ist er zu niedrig sind einige Einschnitte 26 zu verschließen; ist er zu hoch sind weitere Öffnungen 26 freizugeben - die entsprechende Anzahl ist mittels eines einfachen Dreisatzes rechnerisch zu ermitteln.

Erneuter Start des Ofenantriebes und der Produktaufgabe mit den oben gewählten Einstellungen. Nach erneutem Abwarten des stationären Betriebszustandes (ca. 10 Stunden) ist der Produktfüllstand am Stemwehr 22 bei stehendem Ofen 1 nochmals zu überprüfen - nun sollten der Soll- und Istwert übereinstimmen (falls nicht, ist eine erneute Anpassung notwendig).

Falls es für notwendig erachtet wird, kann eine Überprüfung darüber angeschlossen werden, ob die Verhältnisse auch bei veränderten Durchsatzleistungen korrekt sind.

Ebenfalls sinnvoll kann eine Überprüfung des Einflusses einer Drehzahlvariation sein, so dass evt. vorhandene Unzulänglichkeiten der Funktion des Stemwehres 22 (z.B. bei veränderter Korngrößenverteilung in Abhängigkeit von der Durchsatzleistung) durch eine (geringfügige) Drehzahlanpassungen kompensiert werden können.

Sollte irgendwann ein genereller Wechsel der Produktqualität anstehen, so ist das Stemwehr 22 für dieses Produkt neu einzustellen - gleiches gilt bei einem generellen Wechsel der standardmäßigen Ofendrehzahl oder nach einem Verändern der Ofenneigung.

Nachdem die Einstellarbeiten am Stemwehr 22 abgeschlossen sind (und ggf. der Ofen 1 komplett lehrgefahren wurde), kann mit dem Aufheizen begonnen werden.

Hierfür sind folgende Informationen wichtig:

Zur Überwachung stehen für jede Temperaturregelzone 36 ein Strahlungspyrometer 48 zur berührungslosen Messung der Trommelwandtemperatur, zwei Doppelthermoelemente 50 zur Messung der Produkttemperatur (700 mm bzw. 200 mm Abstand zur Trommelwand 3) sowie mehrere Doppelthermoelemente zur Übertemperatur-Überwachung der elektrischen Heizelemente zur Verfügung.

Die Messung der Produkttemperatur erfolgt (wie oben angegeben) in zwei unterschiedlichen Abständen zur Trommelwand 3, d.h. 1 x hoch in der Produktschüttung und 1 x tief in der Produktschüttung. Die tiefliegenden Messpunkte werden immer produktberührt sein, sofern der Ofenfüllgrad über 3,5% beträgt; bei den hochliegenden Messpunkten ist dieses erst bei Füllgraden über 21,5% der Fall. Es sei angemerkt, dass die hochliegenden Messpunkte teilweise nicht die Produkttemperatur, sondern die Gastemperatur anzeigen.

Die Heizleistung kann für jede Temperaturregelzone stufenlos von Null bis Maximum, bevorzugt individuell angepasst an die jeweiligen Anforderungen, eingestellt werden. Die Regelung der jeweiligen Heizleistung erfolgt automatisch über Eingabe der Trommelmantel-Solltemperatur je Regelzone 36 und Messung der Trommelmantel-Isttemperatur mittels der Strahlungspyrometer 48.

Die Heizleistung ist jeweils begrenzt durch die Überwachung der maximal zulässigen Heizelemente-Temperatur mittels der o.g. Doppelthermoelemente.

Es ist bei der Wahl der Trommelwandtemperaturen zu bedenken, dass PET einen Schmelzpunkt von ca. 250°C besitzt (durch Verunreinigungen bedingt sind auch niedrigere Werte möglich). Praktische und theoretische Untersuchungen haben ergeben, dass für Produkttemperaturen unterhalb 180°C mit Trommelmanteltemperaturen bis max. 280°C gearbeitet werden kann, ohne dass es zum Anschmelzen von Produkt am Trommelmantel 3 kommt - Bedingung hierfür ist jedoch eine ausreichend schnelle Durchmischung des Produktes 64; es wird deshalb empfohlen, mit mindestens 4 min⁻¹ Trommeldrehzahl zu fahren. Oberhalb 180°C Produkttemperatur sollte die Trommelwandtemperatur unterhalb des Schmelzpunktes (d.h. <250°C) eingestellt werden; oberhalb 220°C Produkttemperatur sollte die Wandtemperatur zur Sicherheit auf < 230°C heruntergesetzt werden (wegen eines evt. niedrigeren Schmelzpunktes durch Verunreinigungen im PET). Als Maßstab für die relevanten Produkttemperaturen sollten hierbei grundsätzlich die Anzeigen der tiefliegenden Messpunkte (s.o.) herangezogen werden.

Um eine Hydrolyse des PET bei hohen Temperaturen zu verhindern, wird der Produktraum 5 mit getrockneter (und auf 220°C vorgeheizter) Heiß-Luft durchströmt - damit die im Einfallbereich verdampfte Restfeuchte nicht Kontakt mit dem weiter aufgeheizten PET im Ausfallbereich bekommt, wird die Luft im Gegenstrom zum Produkt durch den Ofen 1 geführt. Eine besondere Bedeutung kommt in diesem Zusammenhang den Burgmann-Dichtungen zu, welche den Übergang zwischen dem rotierenden Drehofenmantel 3 und den feststehenden Ein- und Ausfallgehäusen 38 und 40 bilden. Es sollte vermieden werden, dass an diesen Stellen Umgebungsluft in den Produktraum 5 eintritt bzw. Staub oder Gase aus dem Ofen 1 austreten. Damit dieses zuverlässig gewährleistet werden kann, sollten die Burgmann-Dichtungen ebenfalls mit getrockneter (und auf 220°C vorgeheizter) Luft beaufschlagt werden. Der Vordruck dieser Luftbeaufschlagung sollte so groß gewählt werden, dass keine Prozessgase in die Burgmann-Dichtung hineingedrückt werden und dass Staub von den Dichtflächen ferngehalten ("weggeblasen") wird - grundsätzlich ist dieses am einfachsten und sichersten dann zu realisieren, wenn der Produktraum 5 in einem leichten Unterdruck gehalten wird (-0,1 bis -1 mbar). Es ist erwünscht, den Volumenstrom der Luftbeaufschlagung zu begrenzen - eine Kontrolle darüber ist jeweils mittels einer Vorort-Volumenstromanzeige und einem Stellventil gegeben.

Bei Ausfallen des Ofenhauptantriebes (z.B. durch einen Schaden am Motor oder durch einen Stromausfall) sollte dafür Sorge getragen werden, dass (solange der Ofenmantel 3 heiß ist) ein Notantrieb zum Einsatz kommt (z.B. Hilfsmotor auf Notstromschiene) und dass die Beheizungseinrichtung 49 abgeschaltet wird.

Das (langsame) Weiterdrehen des Ofens 1 ist erforderlich, um ein Ankleben von Produkt am Ofenmantel zu verhindern. Diese Maßnahmen sind bevorzugt Teil einer Anlagenveniegelung und sollten automatisch erfolgen.

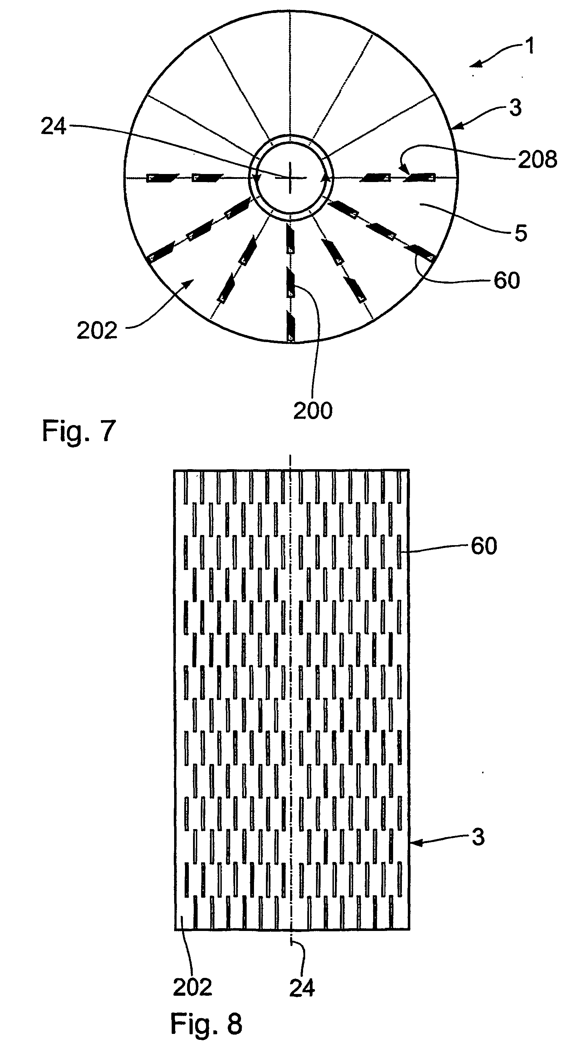

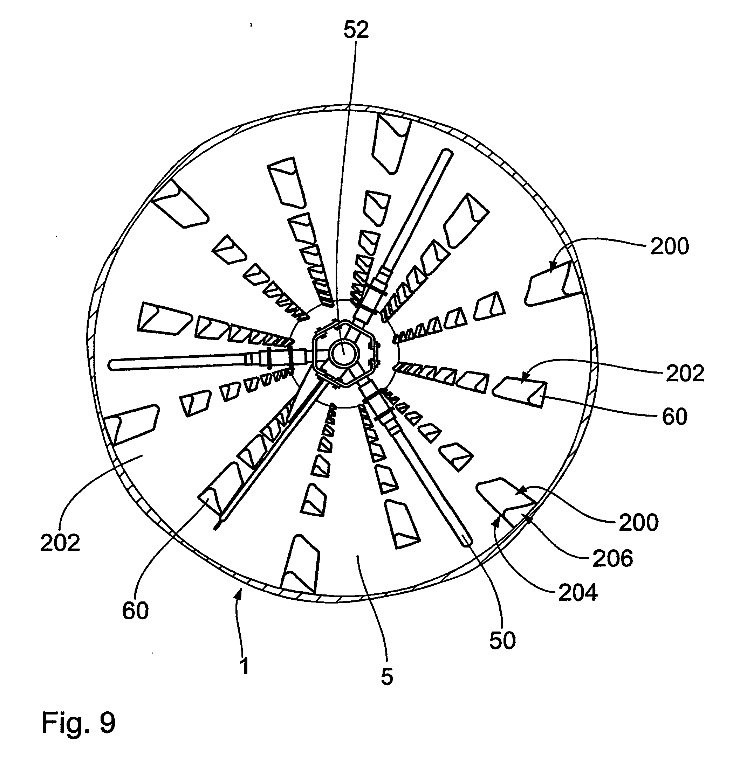

Fig. 7 zeigt eine schematische, perspektivische Ansicht des Drehrohrofens 1 in Richtung seiner Längsachse. Es sind einige Leisten 60 zur Verdeutlichung ihrer Anordnung dargestellt, jedoch nicht alle. Eine dunkel dargestellte Dachschräge 200 der Leisten 60 ist flacher gegenüber einer Innenoberfläche 202 des Drehrohrofens 1 angewinkelt als eine im wesentlichen senkrecht zur Zeichnungsebene verlaufende Dachschräge 204 (siehe Fig. 9). Die Dachschrägen 200 und 204 sind als geschlossenes Dach ausgebildet, welches an seinen Stirnseiten 206 und 208 verschlossen ist, zum anderen haben sie einen bestimmten Anstellwinkel gegenüber der Innenoberfläche 202.

Der Winkel ist so gewählt, dass das Material auf der flachen Seite 200 des Daches entlang gleitet. Die steilere Seite 204 ist verschlossen, damit sich im wesentlichen kein Material in die Schräge 204 setzen kann. Dies könnte zum Verkleben des Materials mit der Leiste 60 führen, da eingeklemmtes Material, permanent von außen beheizt, überhitzt werden könnte.

Durch den flachen Winkel der Dachschräge 200 wird erreicht, dass sich das Material zwar im wesentlichen "nierenförmig" umwälzt, aber nicht zu lange an der Leiste 60 verweilt. Bei steilerem Anstieg könnte es vorkommen, dass das Material zulange mit nach oben genommen wird, was im schlimmsten Fall zum Verkleben des Materials an den Hebeleisten 60 führen könnte, besonders wenn noch andere leichter schmelzende Materialien in dem sich im Ofen 1 befindenden Gemisch enthalten sind.

Die Anordnung der Hebeleisten 60 ist gleichmäßig und gegenüber den benachbarten Leisten 60 axial versetzt unterbrochen, wodurch eine bessere Mischung des Materials erzielt wird. Bei ebenfalls möglichen durchgehenden geraden Leisten 60 könnte der Effekt zu geringer Vermischung auftreten. Mit unterbrochenen Leisten 60 rollt das Material vorteilhaft in zwei Dimensionen, zum einen entlang der Wandung 3 nierenförmig und zum anderen entlang der Leisten 60 kreisförmig.

Fig. 8 zeigt eine schematische Darstellung des abgewickelten Mantels 3 des Drehrohrofens 1 und Fig. 9 eine fotographische Aufnahme des Drehrohrofens 1 entsprechend Fig. 7.

## Patentansprüche

1. Vorrichtung zur Reinigung und/oder Dekontamination von Polyester,
mit einem mit einem Gemisch (64) aus Polyester und einem alkalischen Material zu speisenden, zumindest teilweise beheizten Drehrohrofen (1) zur Durchführung einer Verseifungsreaktion in dem Gemisch (64),
wobei innerhalb des Drehrohrofens (1) ein das Innere (5) des Drehrohrofens (1) zumindest teilweise verschließendes Wehr (22) angeordnet ist,
wobei der Drehrohrofen (1) auf seiner Innenoberfläche mindestens eine, axial ausgerichtete Leiste (60) aufweist,
**dadurch gekennzeichnet, dass** die Leiste (60) als geschlossenes Dach ausgebildete Dachschrägen (200, 204) aufweist.

2. Vorrichtung nach Anspruch 1,
wobei das Wehr (22) im Bereich des stromabwärts gelegenen Endes des beheizten Ofenbereiches angeordnet ist.

3. Vorrichtung nach einem der vorstehenden Ansprüche,
wobei das Wehr (22), bevorzugt 10 bis 14, weiter bevorzugt 12, sternförmig von der Mitte des Wehrs (22) ausgehende Durchtrittsöffnungen (26) aufweist.

4. Vorrichtung nach dem vorstehenden Anspruch,
wobei die Durchtrittsöffnungen (26) zumindest teilweise mit Abdeckungen (30) abdeckbar sind, um den Füllungsgrad des Drehrohrofens durch Variation der Aufstauwirkung des Wehrs, bevorzugt in einer 5 %-Staffelung des Füllungsgrades von 0 % bis etwa 30 %, bevorzugt bis etwa 50 %, zu variieren.

5. Vorrichtung nach einem der vorstehenden Ansprüche,
wobei der Drehrohrofen (1) in seinem Inneren einen im wesentlichen zylinderförmigen Hohlraum (5) zur Aufnahme des Gemisches (64) bildet.

6. Vorrichtung nach dem vorstehenden Anspruch.
wobei die die Dachschrägen (200, 204) der Leiste (60) bildenden Dachflächen mit der Innenoberfläche (202) des Drehrohrofens (1) unterschiedliche Winkel bilden.

7. Vorrichtung nach dem vorstehenden Anspruch,
wobei eine der Dachflächen (200, 204) einen steilen Winkel mit der Innenoberfläche (202) des Drehrohrofens (1) bildet, um zumindest im wesentlichen ein Festsetzen und /oder Verkleben des Gemisches (64) an dieser Dächfläche (200, 204) zu verhindem, während die andere Dachfläche (200, 204) einen flachen Winkel mit der Innenoberfläche (202) des Drehrohrofens (1) bildet, um zumindest im wesentlichen eine kurze Verweilzeit und/oder ein Entlanggleiten des Gemisches (64) an dieser Dachfläche (200, 204) zu ermöglichen.

8. Vorrichtung nach einem der vorstehenden Ansprüche,
wobei mindestens eine der mindestens einen axial ausgerichteten Leiste (60) in axialer Richtung mindestens einmal unterbrochen ist.

9. Vorrichtung nach einem der vorstehenden Ansprüche,
wobei mindestens eine der mindestens einen axial ausgerichteten Leiste (60) in axialer Richtung in regelmäßigen Abständen unterbrochen ist.

10. Vorrichtung nach einem der vorstehenden Ansprüche,
wobei in Umfangsrichtung direkt oder indirekt benachbarte Leisten (60) zumindest teilweise versetzt zueinander unterbrochen sind.

11. Vorrichtung nach einem der vorstehenden Ansprüche,
wobei die mindestens eine axial ausgerichtete Leiste (60) an ihren axialen Stirnseite (206, 208) jeweils eine im wesentlichen geschlossene Oberfläche aufweist.

12. Vorrichtung nach einem der vorstehenden Ansprüche,
wobei 5 bis 20, bevorzugt 12, entlang des Umfanges gleichmäßig verteilte, axiale Leisten (60) vorgesehen sind.

13. Vorrichtung nach einem der vorstehenden Ansprüche,
wobei die mindestens eine axial ausgerichtete Leiste (60) sich derart weit radial nach innen in den Innenraum (5) des Drehrohrofens (1) erstreckt, das im gesamten Drehzahlbereich des Drehrohrofens (1) ein Überschlag des Gemisches (64) in dem Drehrohrofen (1) verhindert wird.

14. Vorrichtung nach einem der vorstehenden Ansprüche,
wobei der Drehrohrofen (1) einen Durchmesser von 2 m bis 4 m, bevorzugt 2,6 m, und eine beheizte Länge von 15 m bis 25 m, bevorzugt 18 m, aufweist.

15. Vorrichtung nach einem der vorstehenden Ansprüche,
wobei der Drehrohrofen (1) zur Aufnahme des Gemisches (64) einen Gemischeinlaufzylinder mit einem Durchmesser von 0,5 m bis 1,5 m, bevorzugt 0,8 m, aufweist.

16. Vorrichtung nach einem der vorstehenden Ansprüche,
wobei der Drehrohrofen (1) zur Ausgabe des Gemisches (64) einen Gemischauslaufzylinder (18) mit einem Durchmesser von 1 m bis 3 m, bevorzugt 1,8 m, aufweist.

17. Vorrichtung nach einem der vorstehenden Ansprüche,
wobei der Gemischeinlaufzylinder (14) und/oder der Gemischauslaufzylinder (18) mit einem konischen Übergang (16; 20) mit dem Drehrohrofen (1) verbunden ist.

18. Vorrichtung nach einem der vorstehenden Ansprüche,
wobei der Drehrohrofen (1) innerhalb des Gemischauslaufzylinders (18) Förderspiralen zur Förderung des Gemisches (64) aufweist.

19. Vorrichtung nach einem der vorstehenden Ansprüche,
wobei an den Enden des Gemischeinlaufrylinders (14) und/oder des Gemischauslaufzylinders (18) Flansche zur Aufnahme von Abdichtungen zur luftdichten Abdichtung des Drehrohrofens (1) angeordnet sind.

20. Vorrichtung nach einem der vorstehenden Ansprüche,
wobei der Drehrohrofen (1) in seinem Inneren, bevorzugt etwa sechs, Schöpftaschen aufweist, welche das Produkt den auslaufseitigen Konus in den Gemischauslaufzylinder (18) hinauffördem.

21. Vorrichtung nach einem der vorstehenden Ansprüche,
wobei der Drehrohrofen (1) zum mechanischen Transport des Gemisches (64) eine Neigung gegenüber der Horizontalen aufweist.

22. Vorrichtung nach einem der vorstehenden Ansprüche,
wobei der Drehrohrofen (1) an einem ausfallseitigen Ende ein Schwenklager aufweist, so dass der Drehrohrofen (1) durch einfallseitiges Anheben und Verschwenken des Drehrohrofens (1) um dieses Schwenklager in die Neigung verschwenkbar ist.

23. Vorrichtung nach einem der vorstehenden Ansprüche,
wobei die Neigung 10 mm/m bis 20 mm/m, bevorzugt 15 mm/m, beträgt. ,

24. Vorrichtung nach einem der vorstehenden Ansprüche,
wobei innerhalb des Drehrohrofens (1), bevorzugt 5 bis 20, weiter bevorzugt 10, Thermoelemente (50, 50a, 50b) zur Überwachung der Gemischtemperatur in dem Drehrohrofen (1) vorgesehen sind, welche Thermoelemente an einem relativ zu dem Drehrohrofen (1) feststehenden Messbalken (52) innerhalb des Drehrohrofens (1) befestigt sind.

25. Vorrichtung nach dem vorstehenden Anspruch,
wobei pro Heizzone (36) zwei Thermoelemente (50, 50a, 50b) vorgesehen sind.

26. Vorrichtung nach einem der vorstehenden Ansprüche,
wobei an einem axialen Punkt des Drehrohrofens (1) jeweils zwei Thermoelemente (50, 50a, 50b) vorgesehen sind, die unterschiedlich beabstandet zur Drehachse (24) des Drehrohrofens (1) innerhalb des Drehrohrofens (1) vorgesehen sind.

27. Vorrichtung nach einem der vorstehenden Ansprüche,
wobei der Drehrohrofen (1) zwei bis fünf, bevorzugt drei, Prozesszonen entlang seiner Längsachse (24) aufweist.

28. Vorrichtung nach dem vorstehenden Anspruch,
wobei die Ausgestaltung, die Länge und die Temperatur der ersten Prozesszone derart ist, dass eine weitere Vortrocknung des Gemisches (64) vomehmbar ist, bevorzugt von 0,8 % bis 0,2 %, bevorzugt 0,4 %, Wassergehalt auf 100 ppm bis 50 ppm, bevorzugt 80 ppm, Wassergehalt.

29. Vorrichtung nach einem der beiden vorstehenden Ansprüche,
wobei die Ausgestaltung, die Länge und die Temperatur der zweiten Prozesszone derart ist, dass eine Oberflächenreaktion zur teilweisen Verseifung des Gemisches (64) stattfindet.

30. Vorrichtung nach einem der drei vorstehenden Ansprüche,
wobei die Ausgestaltung, die Länge und die Temperatur der dritten Prozesszone (64) derart ist, dass eine Diffusionsreaktion zur Entfernung von aromatischen Verunreinigungen in dem Gemisch (64) stattfindet.

31. Vorrichtung nach einem der vorstehenden Ansprüche,
wobei in dem Drehrohrofen (1) mindestens drei, bevorzugt fünf, weiter bevorzugt gleichlange, Heizzonen (36) vorgesehen sind.

32. Vorrichtung nach einem der vorstehenden Ansprüche,
wobei außerhalb des Drehrohrofens (1) angeordnete Heizstrahler (49) vorgesehen sind, mit deren Hilfe der Drehrohrofen (1) von außen beheizbar ist, so dass eine indirekte Beheizung des Gemisches (64) in dem Drehrohrofen (1) erzeugbar ist.

33. Vorrichtung nach einem der vorstehenden Ansprüche,
wobei der Drehrohrofen (1) eine Heißluftöffnung (70) zum Einströmen von Heißluft in das Innere des Drehrohrofens (1) aufweist, bevorzugt eine zweite Öffnung (72) zum Ausströmen der verbrauchten Heißluft aufweist.

34. Vorrichtung nach dem vorstehenden Anspruch,
wobei ein Heißlufterzeuger zum Erzeugen der Heißluft vorgesehen ist, deren Temperatur der Temperatur im Inneren des beheizten Drehrohrofens (1) im wesentlichen entspricht.

35. Vorrichtung nach einem der vorstehenden Ansprüche,
wobei ein Heißlufttrockner zum Trocknen der für das Innere des Drehrohrofens (1) vorgesehenen Heißluft vorgesehen ist.

36. Vorrichtung nach einem der vorstehenden Ansprüche,
wobei in dem Drehrohrofen (1) eine, bevorzugt aus, weiter bevorzugt trockener, Heißluft bestehende, Gegenluftströmung entgegen der Bewegungsrichtung des Gemisches mit Hilfe eines Gebläses erzeugbar ist.

37. Vorrichtung nach einem der vorstehenden Ansprüche,
wobei ein Mischer (74) zum Mischen des Gemisches vor Eintritt in den Drehrohrofen (1) vorgesehen ist, welcher Mischer (74) bevorzugt eine geheizte Mischschnecke (76) aufweist.

38. Vorrichtung nach dem vorstehenden Anspruch,
wobei dem Mischer (74) ein Vortrockner zum Trocknen des für den Mischer (74) vorgesehenen Polyesters verschaltet ist.

39. Vorrichtung nach dem vorstehenden Anspruch,
wobei die Heizleistung des Vortrockners zur Trocknung des Inhalts des Vortrockners größer ist als die Lüftungsleistung des Vortrockners zur Trocknung des Inhalts des Vortrockners.

40. Vorrichtung nach einem der beiden vorstehenden Ansprüche,
wobei in dem Vortrockner eine Gegenluftströmung gegen die Bewegungsrichtung es zu trocknenden Gutes in dem Vortrockner erzeugbar ist.

## Claims

1. Apparatus for cleaning and/or decontaminating polyester, comprising an at least partially heated cylindrical rotary oven (1) to be fed with a mix (64) of polyester and an alkaline material, for carrying out a saponification reaction in the mix (64), wherein a weir (22) is disposed inside the cylindrical rotary oven (1) and at least partially closes the interior (5) of the cylindrical rotary oven (1), wherein the cylindrical rotary oven (1) has on its inner surface at least one axially aligned strip (60), **characterised in that** the strip (60) has roof slopes (200, 204) formed as a closed roof.

2. Apparatus according to claim 1, wherein the weir (22) is disposed in the region of the downstream end of the heated oven region.

3. Apparatus according to one of the preceding claims, wherein the weir (22) has 10 to 14, and more preferably 12 through apertures (26) which radiate in a star shape from the centre of the weir (22).

4. Apparatus according to the preceding claim, wherein the through apertures (26) can be at least partially covered with cover members (30) in order to vary the degree of filling of the cylindrical rotary oven by varying the retaining action of the weir in a 5% progression of the degree of filling from 0% to about 30%, preferably to about 50%.

5. Apparatus according to one of the preceding claims, wherein in its interior the cylindrical rotary oven (1) forms a substantially cylindrical cavity (5) for receiving the mix (64).

6. Apparatus according to the preceding claim, wherein the roof faces forming the roof slopes (220, 204) of the strip (60) form different angles with the inner surface (202) of the cylindrical rotary oven (1).

7. Apparatus according to the preceding claim, wherein one of the roof faces (200, 204) forms a steep angle with the inner surface (202) of the cylindrical rotary oven (1) in order to prevent setting and/or sticking of the mix (64) to this roof face (200, 204), whereas the other roof face (200, 204) forms a gentle angle with the inner surface (202) of the cylindrical rotary oven (1) in order to permit a short dwell time and/or sliding of the mix (64) along this roof face (200, 204).

8. Apparatus according to one of the preceding claims, wherein at least one of the at least one axially aligned strips (60) is interrupted at least once in the axial direction.

9. Apparatus according to one of the preceding claims, wherein at least one of the at least one axially aligned strips (60) is interrupted at regular intervals in the axial direction.

10. Apparatus according to one of the preceding claims, wherein directly or indirectly adjacent strips (60) in the circumferential direction are interrupted at least partially in a staggered manner.

11. Apparatus according to one of the preceding claims, wherein the at least one axially aligned strip (60) has a substantially closed surface at its axial end face (206, 208).

12. Apparatus according to one of the preceding claims, wherein 5 to 20, preferably 12, axial strips (60) are provided distributed evenly over the circumference.

13. Apparatus according to one of the preceding claims, wherein the at least one axially aligned strip (60) extends sufficiently far radially inward into the interior (5) of the cylindrical rotary oven (1) that turning over of the mix (64) in the cylindrical rotary oven (1) is prevented throughout the speed range of the cylindrical rotary oven (1).

14. Apparatus according to one of the preceding claims, wherein the cylindrical rotary oven (1) has a diameter of 2m to 4m, preferably 2.6 m, and has a heated length of 15 m to 25 m, preferably 18 m.

15. Apparatus according to one of the preceding claims, wherein the cylindrical rotary oven (1) has a mix intake cylinder with a diameter of 0.5 m to 1.5 m, preferably 0.8 m, for receiving the mix (64).

16. Apparatus according to one of the preceding claims, wherein the cylindrical rotary oven (1) has a mix discharge cylinder (18) with a diameter of 1 m to 3 m, preferably 1.8 m, for discharging the mix (64).

17. Apparatus according to claim 1, wherein the mix intake cylinder (14) and/or the mix discharge cylinder (18) is connected with a conical transition member (16; 20) to the cylindrical rotary oven (1).

18. Apparatus according to one of the preceding claims, wherein within the mix discharge cylinder (18), the cylindrical rotary oven (1) has conveyor spirals for conveying the mix (64).

19. Apparatus according to one of the preceding claims, wherein flanges are disposed at the ends of the mix intake cylinder (14) and/or the mix discharge cylinder (18) in order to mount seals for the air-tight sealing-off of the cylindrical rotary oven (1).

20. Apparatus according to the preceding claim, wherein in its interior the cylindrical rotary oven (1) has preferably approximately six scoop pockets which convey the product at the discharge-end cone into the mix discharge cylinder (18).

21. Apparatus according to one of the preceding claims, wherein the cylindrical rotary oven has an incline relative to the horizontal for mechanically conveying the mix (64).

22. Apparatus according to one of the preceding claims, wherein at its discharge end the cylindrical rotary oven (1) has a pivot mounting, so that the cylindrical rotary oven (1) can be pivoted about that pivot mounting into an inclined position by being lifted at its intake end and pivoted.

23. Apparatus according to the preceding claim, wherein the incline is 10 mm/m to 20mm/m, preferably 15 mm/m.

24. Apparatus according to one of the two preceding claims, wherein provided within the cylindrical rotary oven (1) are preferably from 5 to 20, and more preferably 10, thermocouple elements (50, 50a, 50b) for monitoring the mix temperature in the cylindrical rotary oven (1), which thermocouple elements are fixed to a measuring beam (52) which is stationary relative to the cylindrical rotary oven (1) within the cylindrical rotary oven (1).

25. Apparatus according to the preceding claim, wherein two thermocouple elements (50, 50a, 50b) are provided per heating zone (36).

26. Apparatus according to one of the preceding claims, wherein provided at an axial point of the cylindrical rotary oven (1) are two respective thermocouple elements (50, 50a, 50b), which are disposed within the cylindrical rotary oven (1) at different spacings relative to the axis of rotation (24) of the cylindrical rotary oven (1).

27. Apparatus according to one of the preceding claims, wherein the cylindrical rotary oven (1) has two to five, preferably three processing zones along its longitudinal axis (24).

28. Apparatus according to the preceding claim, wherein the configuration, length and temperature of the first process zone are such that further predrying of the mix (64) can be effected, preferably from 0.8% to 0.2%, preferably 0.4% water content, to 100 ppm to 50 ppm, preferably 80 ppm, water content.

29. Apparatus according to one of the two preceding claims, wherein the configuration, length and temperature of the second processing zone are such that a surface reaction takes place for the partial saponification of the mix (64).

30. Apparatus according to one of the three preceding claims, wherein the configuration, length and temperature of the third processing zone (64) are such that a diffusion reaction takes place to remove aromatic impurities from the mix (64).

31. Apparatus according to one of the preceding claims, wherein at least three and preferably five heating zones (36), which are more preferably of equal length, are provided in the cylindrical rotary oven (1).

32. Apparatus according to one of the preceding claims, wherein radiant heaters (49) are provided outside the cylindrical rotary oven (1), and by means of these the cylindrical rotary oven (1) is heatable from the exterior so that indirect heating of the mix (64) in the cylindrical rotary oven (1) can be produced.

33. Apparatus according to one of the preceding claims, wherein the cylindrical rotary oven (1) has a hot-air aperture (70) for the intake flow of hot air into the interior of the cylindrical rotary oven (1), and preferably a second aperture (72) for the discharge flow of the spent hot air.

34. Apparatus according to the preceding claim, wherein a hot-air generator is provided for generating hot air, whose temperature is substantially the same as the temperature inside the heated cylindrical rotary oven (1 ).

35. Apparatus according to one of the preceding claims, wherein a hot-air dryer is provided for drying the hot air intended for the interior of the cylindrical rotary oven (1 ).

36. Apparatus according to one of the preceding claims, wherein an air counterflow preferably consisting of hot air, which is more preferably dry, can be produced in the cylindrical rotary oven (1) by means of a fan so as to flow in the opposite direction to the direction of motion of the mix.

37. Apparatus according to one of the preceding claims, wherein a mixer (74) is provided for mixing the mix before its entry into the cylindrical rotary oven (1), the mixer (74) preferably having a heated mixing screw (76).

38. Apparatus according to the preceding claim, wherein a pre-dryer for drying the polyester provided for the mixer (74) is connected upstream of the mixer (74).

39. Apparatus according to the preceding claim, wherein the heating power of the pre-dryer for drying the contents of the pre-dryer is greater than the ventilation power of the pre-dryer for drying the contents of the pre-dryer.

40. Apparatus according to one of the two preceding claims, wherein in the pre-dryer an air counterflow can be produced moving in the opposite direction to the direction of motion of the material to be dried in the pre-dryer.

## Revendications

1. Dispositif pour la purification et/ou la décontamination du polyester, comprenant un four tubulaire rotatif au moins partiellement chauffé (1) et alimenté par un mélange (64) de polyester et d'une substance alcaline, permettant la réalisation d'une réaction de saponification dans le mélange (64), l'intérieur du four tubulaire rotatif (1) comportant une barrière formant barrage (22) fermant au moins partiellement l'intérieur (5) dudit four tubulaire rotatif (1), le four tubulaire rotatif (1) présentant sur sa surface interne au moins une latte (60) dirigée axialement, **caractérisé en ce que** la latte (60) présente des pentes de toit (200, 204) formant comme un toit fermé.

2. Dispositif selon la revendication 1, la barrière formant barrage (22) étant disposée dans la zone de l'extrémité chauffée du four, située elle-même en aval dans le courant.

3. Dispositif selon l'une quelconque des revendications précédentes, la barrière formant barrage (22) présentant 10 à 14 et préférentiellement 12 ouvertures de passage (26) s'étendant en forme d'étoile depuis le milieu de la barrière formant barrage (22).

4. Dispositif selon la revendication précédente, les ouvertures de passage (26) pouvant au moins partiellement être couvertes au moyen de couvercles (30), permettant de varier le degré de remplissage du four tubulaire rotatif en faisant varier le pouvoir de retenue de la barrière, de préférence par échelons de 5 % du degré de remplissage, entre 0 % et environ 30 %, de préférence d'environ 50 %.

5. Dispositif selon l'une quelconque des revendications précédentes, l'intérieur du four tubulaire rotatif (1) présentant essentiellement la forme d'un espace cylindrique (5) recevant le mélange (64).

6. Dispositif selon la revendication précédente, les surfaces de toit formant les pentes de toit (200, 204) de la latte (60) formant des angles différents avec la surface interne (202) du four tubulaire rotatif (1).

7. Dispositif selon la revendication précédente, l'une des pentes de toit (200, 204) formant un angle abrupt avec la surface interne (202) du four tubulaire rotatif (1), afin d'empêcher au moins en grande partie le blocage et/ou l'adhérence du mélange (64) à ces surfaces de toit (200, 204), tandis que l'autre surface de toit (200, 204) forme un angle plat avec la surface interne (202) du four tubulaire rotatif (1), afin de permettre au moins en grande partie un temps de résidence bref et/ou un cheminement du mélange (64) le long de cette surface de toit (200, 204).

8. Dispositif selon l'une quelconque des revendications précédentes, au moins l'une de la au moins une latte (60) dirigée axialement étant interrompue au moins une fois en direction axiale.

9. Dispositif selon l'une quelconque des revendications précédentes, au moins l'une de la au moins une latte (60) dirigée axialement étant interrompue à intervalles réguliers en direction axiale.

10. Dispositif selon l'une quelconque des revendications précédentes, les lattes (60) voisines directement ou indirectement en direction de circonférence étant interrompues au moins en partie en quinconce les unes par rapport aux autres.

11. Dispositif selon l'une quelconque des revendications précédentes, la au moins une latte (60) dirigée axialement présentant sur son côté frontal axial (206, 208) une surface en grande partie fermée.

12. Dispositif selon l'une quelconque des revendications précédentes, 5 à 20, et préférentiellement 12, lattes axiales (60) distribuées régulièrement le long du périmètre ayant été prévues.

13. Dispositif selon l'une quelconque des revendications précédentes, au moins une latte à orientation axiale (60) s'étendant en direction radiale vers l'intérieur (5) du four tubulaire rotatif (1), au point d'empêcher le renversement du mélange (64) dans le four (1) pour toute la gamme de vitesses de rotation du four (1).

14. Dispositif selon l'une quelconque des revendications précédentes, le diamètre du four tubulaire rotatif (1) s'étendant de 2 m à 4 m, et étant préférentiellement de 2,6 m, et le four présentant une longueur chauffée de 15 m à 25 m, préférentiellement 18 m.

15. Dispositif selon l'une quelconque des revendications précédentes, le four tubulaire rotatif (1) recevant le mélange (64) présentant un cylindre d'admission du mélange dont le diamètre varie entre 0,5 m et 1,5 m, étant préférentiellement de 0,8 m.

16. Dispositif selon l'une quelconque des revendications précédentes, le four tubulaire rotatif (1) permettant la sortie du mélange (64) présentant un cylindre de sortie du mélange (18) dont le diamètre varie entre 1 m et 3 m, étant préférentiellement de 1,8 m.

17. Dispositif selon l'une quelconque des revendications précédentes, le cylindre d'admission du mélange (14) et/ou le cylindre de sortie du mélange (18) étant raccordés au four tubulaire rotatif (1) par l'intermédiaire d'une section de transition conique (16; 20).

18. Dispositif selon l'une quelconque des revendications précédentes, le four tubulaire rotatif (1) présentant des hélices transporteuses du mélange (64) à l'intérieur du cylindre de sortie du mélange (18).

19. Dispositif selon l'une quelconque des revendications précédentes, les extrémités du cylindre d'admission du mélange (14) et/ou du cylindre de sortie du mélange (18) présentant des brides pouvant recevoir des garnitures permettant d'assurer l'herméticité du four tubulaire rotatif (1).

20. Dispositif selon l'une quelconque des revendications précédentes, l'intérieur du four tubulaire rotatif (1) présentant préférentiellement environ six poches formant écope transportant le produit le long du cône du côté de la sortie dans le cylindre de sortie du mélange (18).

21. Dispositif selon l'une quelconque des revendications précédentes, le four tubulaire rotatif (1) étant incliné par rapport à l'horizontale, afin d'assurer le transport mécanique du mélange (64).

22. Dispositif selon l'une quelconque des revendications précédentes, le four tubulaire rotatif (1) présentant à une extrémité de sortie un support pivotant permettant de varier l'inclinaison du four (1) en le soulevant à son extrémité d'admission et en le faisant pivoter.

23. Dispositif selon l'une quelconque des revendications précédentes, l'inclinaison variant de 10 mm/m à 20 mm/m et étant préférentiellement de 15 mm/m.

24. Dispositif selon l'une quelconque des revendications précédentes, 5 à 20 thermocouples, et en particulier 10 thermocouples (50, 50a, 50b), étant prévus de préférence à l'intérieur du four tubulaire rotatif (1) pour surveiller la température du mélange, lesdits thermocouples étant attachés à une barre de mesure (52) située à l'intérieur du four tubulaire rotatif (1) et fixe par rapport à ce dernier.

25. Dispositif selon la revendication précédente, deux thermocouples (50, 50a, 50b) étant prévus par zone de chauffage (36).

26. Dispositif selon l'une quelconque des revendications précédentes, deux thermocouples (50, 50a, 50b) étant prévus en un point axial du four (1) à l'intérieur du four tubulaire rotatif (1) et présentant chacun une distance différente à l'axe de rotation (24) du four (1).

27. Dispositif selon l'une quelconque des revendications précédentes, le four tubulaire rotatif (1) présentant deux à cinq et préférentiellement trois zones de processus le long de son axe longitudinal (24).

28. Dispositif selon la revendication précédente, la structure, la longueur et la température de la première zone de processus permettant de procéder à un pré-séchage supplémentaire du mélange (64), d'une teneur en eau située préférentiellement entre 0,8 % et 0,2 % et en particulier de 0,4 % à une teneur en eau de 100 ppm à 50 ppm, préférentiellement de 80 ppm.

29. Dispositif selon l'une des deux revendications précédentes, la structure, la longueur et la température de la seconde zone de processus assurant une réaction superficielle causant une saponification partielle du mélange (64).

30. Dispositif selon l'une des trois revendications précédentes, la structure, la longueur et la température de la troisième zone de processus assurant une réaction de diffusion permettant l'élimination d'impuretés aromatiques du mélange (64).

31. Dispositif selon l'une quelconque des revendications précédentes, au moins trois et préférentiellement cinq zones de chauffage (36), ayant de préférence toutes la même longueur, étant prévues dans le four tubulaire rotatif (1).

32. Dispositif selon l'une quelconque des revendications précédentes, des radiateurs (49) étant prévus à l'extérieur du four tubulaire rotatif (1), permettant de chauffer ledit four (1) depuis l'extérieur, assurant le chauffage indirect du mélange (64) à l'intérieur du four (1).

33. Dispositif selon l'une quelconque des revendications précédentes, le four tubulaire rotatif (1) présentant un orifice d'admission d'air chaud (70) à l'intérieur du four (1) et préférentiellement un second orifice (72) de sortie de l'air chaud usé.

34. Dispositif selon la revendication précédente, un générateur d'air chaud étant prévu, dont la température correspond essentiellement à la température régnant à l'intérieur du four tubulaire rotatif (1).

35. Dispositif selon l'une quelconque des revendications précédentes, un dispositif de séchage à air chaud étant prévu pour assurer le séchage de l'air chaud prévu pour l'intérieur du four tubulaire rotatif (1) .

36. Dispositif selon l'une quelconque des revendications précédentes, un contre-courant, préférentiellement d'air chaud, et aussi de préférence sec, allant en contre du déplacement du mélange à l'intérieur du four tubulaire rotatif (1), ce contre-courant pouvant être généré au moyen d'un ventilateur.

37. Dispositif selon l'une quelconque des revendications précédentes, un mélangeur (74) étant prévu afin de mélanger le mélange avant son admission dans le four tubulaire rotatif (1), ledit mélangeur (74) présentant préférentiellement une hélice mélangeuse chauffée (76).

38. Dispositif selon la revendication précédente, un dispositif de pré séchage assurant le séchage du polyester devant être admis au mélangeur (74) étant prévu en aval dudit mélangeur (74).

39. Dispositif selon la revendication précédente, la capacité chauffante du dispositif de pré séchage qui assure le séchage de son contenu étant supérieure à la capacité de ventilation du dispositif de pré séchage qui assure le séchage de son contenu.

40. Dispositif selon l'un des deux revendications précédentes, un contre-courant d'air allant contre la direction du déplacement du produit à sécher pouvant être généré dans le dispositif de pré séchage.
